Europäisches Patentamt

**European Patent Office**

**Office européen des brevets**

(19)

(11) Publication number: **0 187 696**
A2

(12) **EUROPEAN PATENT APPLICATION**

(21) Application number: **86300023.8**

(22) Date of filing: **03.01.86**

(51) Int. Cl.⁴: **H 04 M 3/56**
**H 04 B 9/00, H 04 M 9/08**

(30) Priority: **03.01.85 US 688641**

(43) Date of publication of application:
**16.07.86 Bulletin 86/29**

(84) Designated Contracting States:
**CH DE FR GB LI NL SE**

(71) Applicant: **CONTROLONICS CORPORATION**
**5 Lyberty Way**
**Westford Massachusetts 01886(US)**

(72) Inventor: **Lucey, Robert E.**
**115 Pelham Island Road**
**Sudbury Massachusetts, 01776(US)**

(74) Representative: **Arthur, Bryan Edward et al,**
**Withers & Rogers 4 Dyer's Buildings Holborn**
**London EC1N 2JT(GB)**

(54) **Full duplex conferencing system.**

(57) A full duplex conferencing system providing hands free, unswitched continuously acting communication paths between one or more local participants and a communications network. The voice of each local participant is sensed through one or more microphones at the local conference, and applied to the communication network. Signals transmitted to the network as well as those received from it are transmitted as pulsed infrared to each local participant. Each local participant wears an infrared receiver and earphone which permits that participant to hear the entire conversation without any switching interruptions. A keyboard and dialer permit direct dialing from the system over the network and a muting control disables the audio circuitry during dialing. A local ringer respnds to network ring signals to provide an audible ring to attract the user's attention for incoming calls.

./...

Croydon Printing Company Ltd.

FIG. 1

## FULL DUPLEX CONFERENCING SYSTEM

## FIELD AND BACKGROUND OF THE INVENTION

It is increasingly necessary in business circles to be able to permit several individuals within a single room to participate in the telephone conversation, both as listeners to all that is said as well as speakers. Conventional approaches to this function have utilized a single speaker and microphone associated with each other in the same unit. The speaker broadcasts to the assembled group the signals received over the telephone line while the microphone picks up the speech of each person and applies it to the telephone network.

The need to keep what is broadcast over the loudspeaker from returning over the microphone path leads to the use of time sharing techniques or switching systems which allow only one direction of communication at any instant and introduce switching transients. Such systems lend an awkwardness to conferencing which impedes the exchange of information. This difficulty is particularly troublesome where conferencing is utilized at two different network ports via bridge or equalizer technology.

## BRIEF SUMMARY OF THE INVENTION

According to the teaching of the present invention a full duplex conferencing system is provided in which each participant is continuously and uninterruptedly both a speaker and listener in a conference that can be extended to any member of participants. Each participant wears about his or her person a wireless listening device which continuously produces, individually controlled audible reproductions of all conference signals on a telecommunications network. The speech of each local conference participant is sensed by one or more microphones and transmitted over the network continuously. The incoming network signals are mixed with the outgoing voice signals of other participants at the same location and continuously and uninterruptedly pulse rate modulated onto infrared light emissions which are detected by each listening device.

Audio signals representing the spoken words of the participants in the local conference are collected by a microphone that is sensitivity controlled by automatic gain control to eliminate over strong signals from being transmitted to the network or each listening device. The signals that are received at each listening device are subject to automatic gain control so high level signals or intereference do not result in an overly loud signal in the listener's ear.

A keyboard is provided that drives a pulse or tone dialer to generate dialing signals which are sent over the network to establish communications with a distant station. Muting is applied to the locally generated audio signals during dialing so as to prevent microphone signals from being transmitted to the network or listening devices and mutes dial pulses. A local ringer responds to ring signals from the network to produce a local ring indication.

## BRIEF DESCRIPTION OF THE DRAWING

These and other features of the present invention are more fully set forth below in the solely exemplary detailed description and accompanying drawing of which:

Fig. 1 is a pictorial view of apparatus according to the invention in use;

Fig. 2 is a block diagram of circuitry according to the invention for connection with a communication network to receive and transmit incoming signals for reception by listening devices and for responding to locally generated audio for application to the network;

Fig. 3 is a block diagram of listening device circuitry for use in the invention;

Fig. 4 is a circuit diagram of portions of the circuitry of Fig. 2;

Fig. 5 is a circuit diagram of circuitry for the listening device of Fig. 3; and

Fig. 6 is a pictorial view of a modified application for the present invention.


## DETAILED DESCRIPTION

The present invention contemplates full duplex communications between a group participating in a conference conversation and one or more distant participants remotely located along a communication network. Each member of the group hears the conversation of other members of the group and of the distant participants cleanly and continuously without switching interruption through a personal listening device that receives infrared transmissions of those signals from a central station. The central station processes all communications with the network and responds through one or more microphones to the spoken words from the group of conference participants for application to the network and the local listening devices.

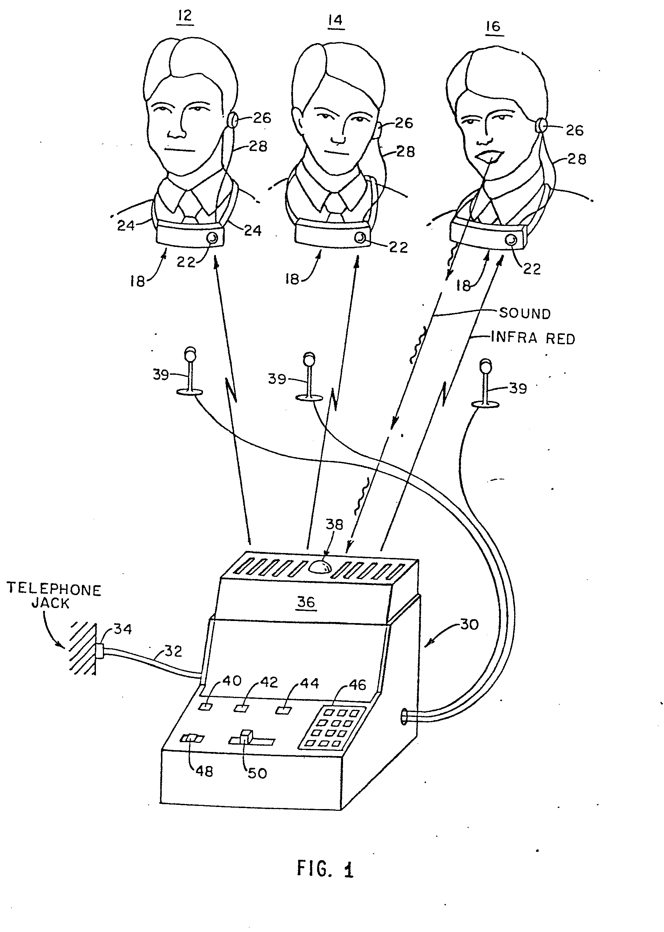

The general operation of such a system can best be understood with respect to the pictorial view of Fig. 1. As shown there a group of local participants 12, 14, 16 in a conference conversation each wear a local listening device 18. Each device 18 includes a circuitry module 20 having an infrared receiving lens 22 and worn about the neck by a strap 24. An earphone 26 is placed in each participant's ear and connected to the module 20 by a cable 28.

A central or base unit 30 is connected by a cable 32 to a standard telephone connection 34 (or optional other network). The central unit 30 includes an emitter array 36 for transmitting modulated infrared radiation to the lenses 22 and associated detectors on the modules 20 of the listening devices 18. The central unit 30 also includes a microphone 38 in the top of the unit that responds to the spoken words from the participants 12...16. Optionally, each participant may have an individual microphone 39 applied to a mixer within the central unit 30. The communication thus provided allows each participant hands free conferencing with personal control over the received conference signals.

Switches 40, 42, and 44 are provided in the central unit to switch between on and off hook conditions, vary microphone sensitivity, and mute the microphone sensitivity respectively as more fully described below. A keyboard 46 is provided to permit operator generation of telephone dialing codes. An on/off switch 48 and volume control 50 for the transmitted infrared radiation are also provided.

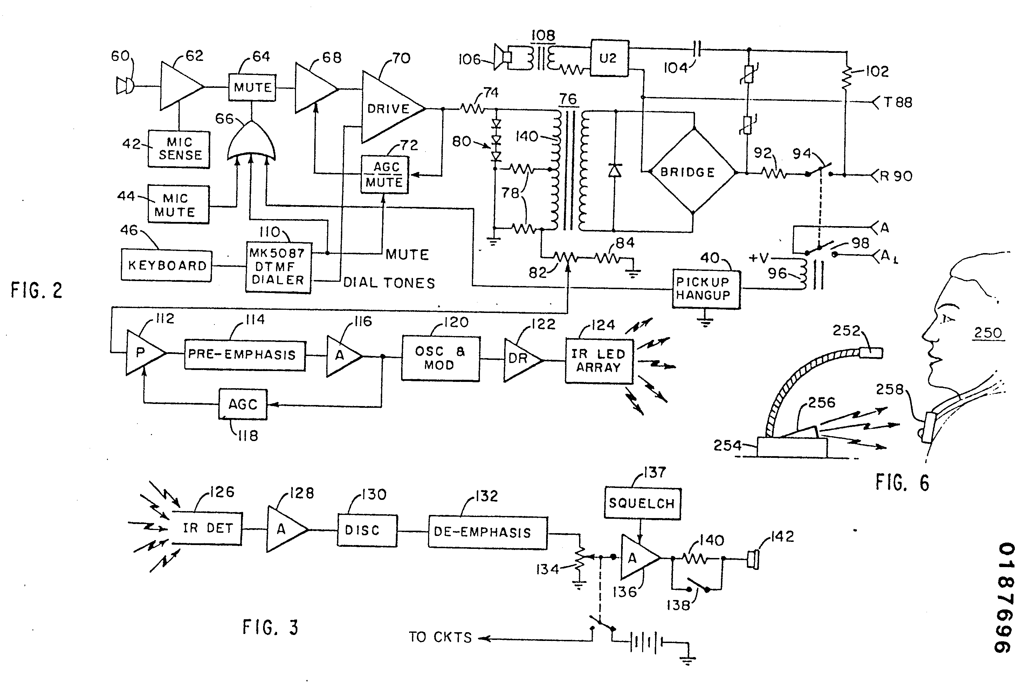

With reference to the block diagram of Fig. 2 the structure and operation of the present invention is more readily apparent. As shown there, a microphone 60 is provided to respond to the voice from the local participants 12...16. Its output is provided to a preamplifier 62 which has its gain adjusted by the microphone sensitivity switch 42. The output of the preamplifier 62 is applied to a muting control 64 which is selectively enabled by three inputs to an OR gate 66, described below, to eliminate the signal from the microphone to the remainder of the circuitry during dialing, while on hook, or by manual control.

The output of the muting control 64 is applied through an amplifier 68 to a line driver amplifier 70. A feedback path from the line driver 70 is applied to vary the gain of the output from the amplifier 68 through a fast attack automatic gain control circuit 72. The AGC is set to be operative only for very loud signals resulting from speaking too close to the microphone so as to prevent overloading of the driver 70 and subsequent circuitry in such conditions.

The output of the line driver 70 is applied through a resistor 74 to the primary of a hybrid transformer 76 that attenuates side tone signals. The primary is center-tapped with the center tap and the end opposite to the driven end connected through resistors 78 to ground and with limiting diodes 80 connected across the center-tap and the driven end. The undriven end of the transformer 76 is connected through a potentiometer 82 and resistor 84 to ground to provide a volume control for the signal transmitted to the listening devices.

The secondary of the transformer 76 is connected to a polarity correcting diode bridge 86 and from the bridge to the telephone transmit and receive connections 88 and 90, the latter being connected through a resistor 92 and relay switch 94 controlled by a coil 96 that is activated by the on and off hook switch 40. Bridge 86 is unneeded in certain circumstances. Contacts 98 also activated by the coil 96 make and break the on and off hook telephone connections.

A ringer circuit 100 is connected across the telephone signal terminals 88 and 90 through a resistor 102 and capacitor 104 to provide audible ring signals over a speaker 106 through a transformer 108 whenever the usual ring signal is provided to the system.

The keyboard 46 activates a dial tone dialer 110 to produce DTMF signals along with a mute control signal. Optionally a pulse dealing module may be used. The DTMF tones are applied to the line driver 70 to produce output tones at the signal terminals 88 and 90. Simultaneously the mute signal from the dialer 110 is applied to the gate 66 activating the muting circuit 64 to eliminate all signals from the preamplifier 62 to the rest of the circuitry. The mute control also disables the AGC circuit so as to prevent loss of the DTMF signal strength from the AGC action. The hybrid transformer 76 will nevertheless attenuate the DTMF side tone transmitted to each listening device.

The signal from the volume control 82 is transmitted to the listening devices and for this purpose is applied to a preamplifier 112. The output of the preamplifier 112 is applied to a pre-emphasis circuit 114 that boosts the high frequencies for the purpose of permitting proper pulse rate modulation. The output of the pre-emphasis circuit is applied to an amplifier 116 from which a fast attack and decay AGC feedback circuit 118 provide a gain control over the preamplifier 112. The AGC circuit 118 is set to operate in the linear range, and only attenuates very high signals such as side tones. The output of the amplifier 116 is also applied to an oscillator and modulator chip 120, typically type LM 566, to produce pulse rate modulation by the audio signal on a high frequency oscillation. The modulated signal is applied to a driver amplifier 122 which in turn pulse excites an array 124 of IR emitting LED diodes.

Each user's listening device is illustrated in Fig. 3. One or more IR detectors 126 respond to the transmitted IR signal from the circuitry of Fig. 2. An amplifier 128 boosts the detected IR signal to an appropriate level for application to an FM discriminator and demodulator circuit 130. Audio is recovered from the discriminator circuit and is applied to a de-emphasis circuit 132 to restore the original frequency balance in that signal. The output of the de-emphasis circuit is applied through a volume control 134 to an amplifier 136. The output of the amplifier 136 is applied to a gain range selector switch 138 and parallel resistor 140 to an earpiece for personal listening by each user. A squelch control 137 may be added for applications related to Fig. 6 described below.

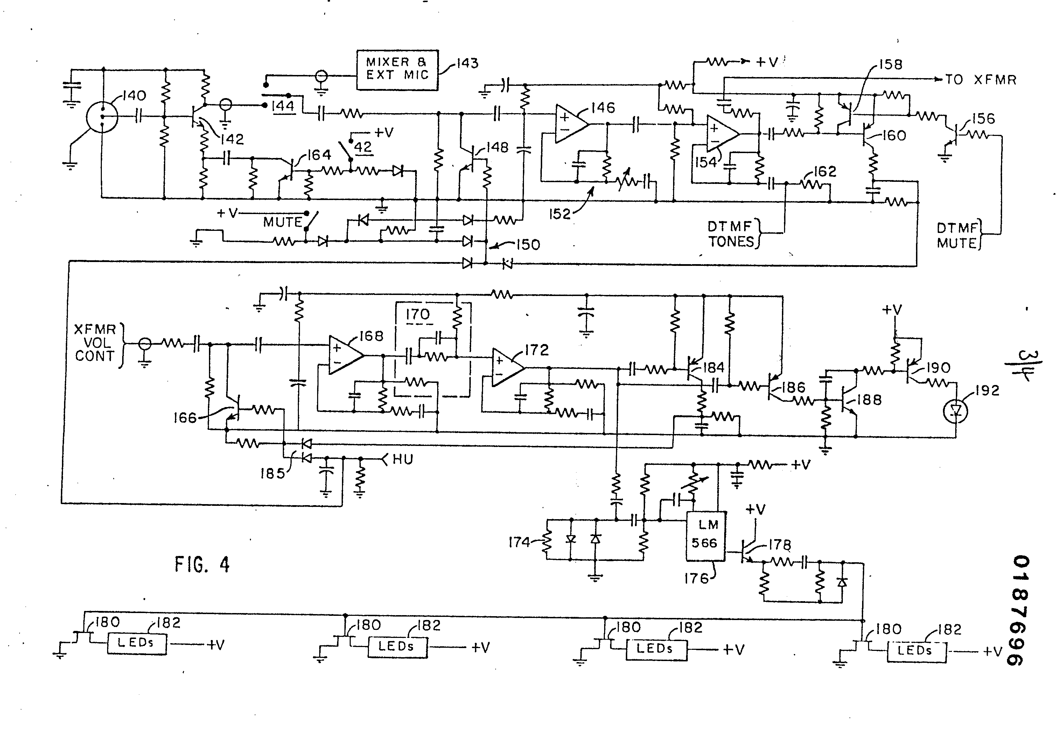

The specific circuitry of the central unit 30 is illustrated in Fig. 4. Shown there is a plug assembly 140 for the microphone. Its output is AC coupled to a suitably biased transistor 142. The output of the transistor 142 is applied to a switch 144 that permits alternate use of plural microphones 39 through mixer 143. The signal from the microphone or mixer is AC coupled into the noninverting input of an operational amplifier 146 and is selectively attenuated by a shunt transistor 148 that provides attenuation of high signal levels in response to AGC levels, the level of AGC and muting provided through an OR gate 150. The gain of the amplifer 146 is set by a negative feedback loop 152 and its output is AC coupled into the noninverting input of a further operational amplifier 154 acting as the line driver 70. The output of the amplifier 154 is AC coupled to the transformer 76 shown above.

The DTMF mute control signal is applied to the base of a transistor 156 that short circuits a transistor 158 during dialing to inhibit AGC during dialing by cutting off a transistor 160. Transistor 160 is driven by the amplifier 154 at its base. The AGC signal is derived in its collector circuit and applied to the OR gate 150.

The dial tones are applied to the transformer by coupling across a resistor 162 which is AC coupled into the inverting input of the amplifier 154.

The microphone sensitivity switch 42 turns on a transistor 164, short circuiting a portion of the emitter impedance of the transistor 142 and changing its gain.

The infrared transmitter circuitry includes an AC isolated shunt transistor 166 in the input path of a preamplifier 168 that provides AGC control as described below. The output of the amplifier 168 is applied through a pre-emphasis network 170 to an amplifier 172, the output of which is coupled through an AC isolated peak limiter 174 to an oscillator modular chip 176. The output of the modulator 176 is applied through a buffer transistor 178 to a set of four fast acting VMOS switches 180 that pulse activate four corresponding LED arrays 182.

The output of the amplifier 170 is also coupled into the bases of a pair of transistors 184 and 186. The transistor 184 has the AGC control taken from its collector circuit. The transistor 186 drives a further pair of cascaded integrating and switching transistors 188 and 190 which in turn drive a light 192. The light 192 is provided to permit proper adjustment of the volume control 82 in Fig. 2 so that the light goes on with a signal and off without it. This allows the modulation level to be set just below the AGC threshold so as to provide optimal modulation that prevents background noise from building up in moments of silence.

The transistor 166 is controlled by the output of the transistor 184 to provide an AGC function through an OR gate 185. The hang up signal also mutes the transmitter by turning on the transistor 166.

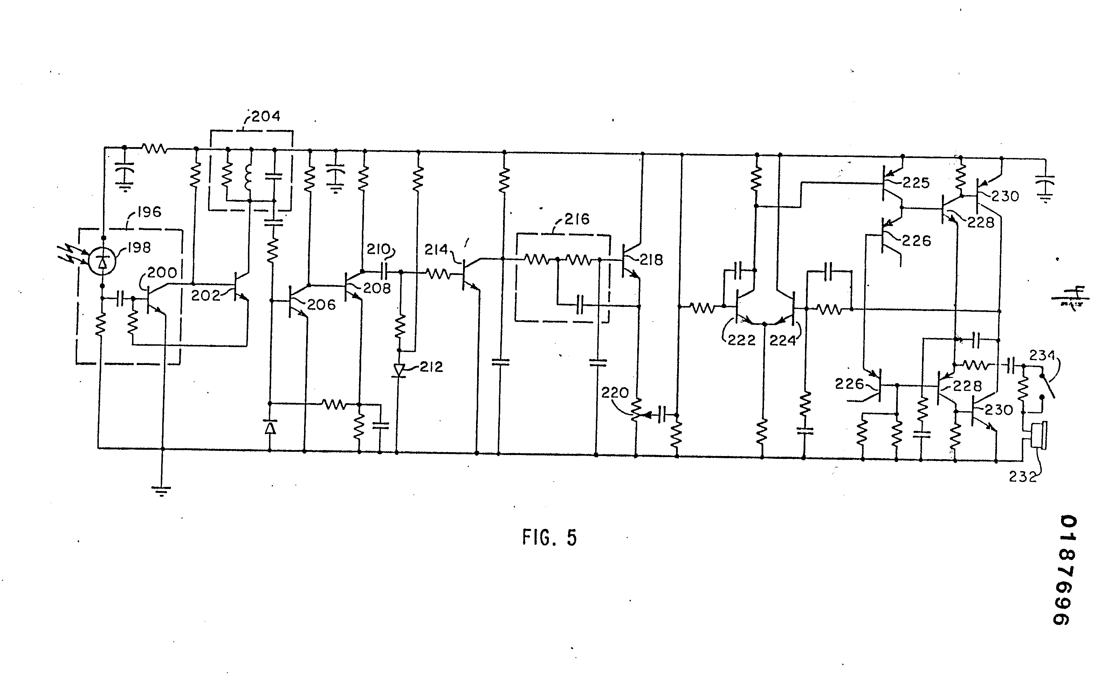

The circuitry of each listening device is illustrated in Fig. 5. An IR detector assembly 196 includes an infrared light sensor 198 AC coupled into a transistor 200. The collector of this transistor drives a further transistor 202 the collector circuit of which includes a band-pass filter 204. The filtered signal is applied to the input of a pair of collector coupled transistors 206 and 208 the output of which is applied through a differentiating capacitor 210 and temperature compensating diode 212, biased on, to ground. The signal at capacitor 210 is applied to a discriminator comprising a transistor 214 that is biased just to the conduction state and integrates the pulse current to give a rate dependent level. Its output is in turn low-pass filtered for de-emphasis by a filter 216 and applied to a transistor 218 that has an output that increases with frequency deviation, completing the detection function. The emitter circuit of the transistor 218 includes a volume control 220 the wiper arm of which applies a signal to a transistor 222 that shares emitters with a transistor 224 in a balanced pair arrangement forming an audio amplifier.

The output of the transistor 222 at its collector is amplified by a transistor 225 applied through a pair of transistors 226, acting to provide temperature compensation, to drive a set of complementary output transistors 228 in a first stage, and set of complementary transistors 230 in a second stage. The signal at the junction between the collectors of the second stage is applied to the base of the transistor 224 to act as feedback to eliminate cross over distortion in the very low current output stages biased near cutoff. The signal at this point is also AC coupled to the ear piece 232 through a gain range selector switch 234 as noted above.

In some applications, typified by Fig. 6, a dispatcher or similar operator 250 will advantageously use the present invention alone, to permit hands free telecommunications via a microphone 252, central station 254, light emitters 256 and listening device 258, typically with squench 173 as described above. Here a

supervisor ~~man~~ walk behind the operator or row of operators to listen in on communications without physical intervention and disturbance.

The invention described above thus provides an effective conferencing system capable of high quality communication with a completely natural full duplex result. The invention may be realized in other form and is accordingly to be limited only in regard to the following claims.

- 10 -

0187696

## C L A I M S

1. A fully duplex conferencing communication system for use in association with a communication network comprising:

means for responding to voice signals from one or more individuals and for applying electrical representations of the voice signals to a communications network;

means for receiving electrical indicia from the network and for transmitting to the location of said one or more individuals electromagnetic representations of the received indicia; and

means associated with each of said one or more individuals for receiving the transmitted representations of the received indicia and for producing audible reproductions of the received representations substantially only to each said individual associated with that means.

2. The conferencing system of claim 1 wherein each said means associated with one or more individuals includes a portable means for providing the recited function.

3. The conferencing system of claim 2 wherein said portable means is adapted to be worn about the body of each said one or more individuals.

4. The conferencing system of claim 1 wherein each said means associated with one or more individuals includes an earpiece for applying the audible reproductions to each said individual.

5. The conferencing system of claim 1 further including:

a base unit housing said responding and said receiving means.

6. The conferencing system of claim 1 further including means for muting the operation of said responding means whereby at least reduced levels of said electrical representations are applied to the communications network.

7. The conferencing system of claim 6 further including:

means for switching between an on hook and off hook condition for said conferencing system; and

means for operating said muting means in response to generation of an on hook condition of said system.

8. The conferencing system of claim 1 further including means for selectively enabling said responding means to respond or not to the voice signals of said one or more individuals.

9. The conferencing system of claim 1 further including means for providing operator adjustment of the level of audible signal applied to each said one or more individuals.

10. The conferencing system of claim 9 wherein said adjusting means is located at at least one of said receiving means and said means associated with each said individual.

11. The conferencing system of claim 1 further including means associated with each responding and receiving means for controlling the level of the transmitted representations to provide the same level for all voices.

12.    The conferencing system of claim 1 further including means associated with said responding means for generating dialing indicia in response to operator activation thereof and for applying the generated dialing indicia to the communications network.

13.    The conferencing system of claim 12 further including means for at least reducing the level of the electrical representations of the voice signals applied to the network during the application of generated dialing indicia to the network.

14.    The conferencing system of claim 1 further including means for providing automatic gain control in the response of at least one of said responding and receiving means for the applied and transmitted signals respectively.

15.    The conferencing system of claim 1 further including means associated with the receiving means for providing an audible indication of a ring signal received by said communications network.

16.    The conferencing system of claim 1 wherein said transmitting means includes means for transmitting at an optical wavelength.

17.    The conferencing system of claim 16 wherein said optical wavelength is in the infrared.

18.    The conferencing system of claim 17 further including means for providing pulse rate modulation of the infrared energy in response to the signals received from the network.

FIG. 1

214

0187696

FIG. 2

FIG. 3

FIG. 6

FIG. 4

FIG. 5

0187696